# EUROPEAN PATENT SPECIFICATION

(11) **EP 4 601 272 B1**
(45) Date of publication and mention of the grant of the patent: **05.08.2026**
(21) Application number: 24841103.5
(22) Date of filing: 16.12.2024
(51) Int. Cl.: H04L 69/18, H04L 65/40, H04W 76/16, H04W 76/27, H04W 76/30, H04L 69/24, H04W 84/04

(54) **ELECTRONIC DEVICE FOR MANAGING PROTOCOL BETWEEN COMMUNICATION CIRCUIT AND PROCESSOR, AND OPERATION METHOD OF ELECTRONIC DEVICE**
ELEKTRONISCHE VORRICHTUNG ZUR VERWALTUNG EINES PROTOKOLLS ZWISCHEN EINER KOMMUNIKATIONSSCHALTUNG UND EINEM PROZESSOR UND BETRIEBSVERFAHREN FÜR DIE ELEKTRONISCHE VORRICHTUNG
DISPOSITIF ÉLECTRONIQUE DE GESTION DE PROTOCOLE ENTRE UN CIRCUIT DE COMMUNICATION ET UN PROCESSEUR, PROCÉDÉ DE FONCTIONNEMENT DE DISPOSITIF ÉLECTRONIQUE

(30) Priority: 20.12.2023 KR 20230187076; 19.01.2024 KR 20240008559
(43) Date of publication of application: 13.08.2025
(73) Proprietor: Samsung Electronics Co., Ltd, Suwon-si, Gyeonggi-do 16677 (KR)
(72) Inventor: YOON, Daeeui, Suwon-si, Gyeonggi-do 16677 (KR); YOO, Hyungnoh, Suwon-si, Gyeonggi-do 16677 (KR); JUNG, Yeojin, Suwon-si, Gyeonggi-do 16677 (KR); CHO, Hongrae, Suwon-si, Gyeonggi-do 16677 (KR)
(74) Representative: HGF
(86) International application number: PCT/KR2024/020339
(87) International publication number: WO 2025/135684

(56) References cited:
- EP-A1- 2 905 938
- EP-A1- 2 922 267
- KR-A- 20210 129 220
- KR-A- 20220 133 699
- US-A1- 2014 187 224
- US-A1- 2023 276 518

## Description

### [Technical Field]

The disclosure relates to and electronic device and a method for operating the electronic device and, more particularly, to a technology for managing a protocol between a communication circuit and a processor.

### [Background Art]

There has been widespread use of various electronic devices such as smartphones, tablet PCs, portable multimedia players (PMPs), personal digital assistants (PDAs), laptop personal computers, and/or wearable devices.

An electronic device may be connected to a cellular network so as to perform cellular communication. In order to perform cellular communication, an electronic device may include a mobile broadband device. The mobile broadband device may refer to a device configured to provide the electronic device with a connection to the cellular network. The mobile broadband device may be mounted in the electronic device and, if disposed outside the electronic device, may be connected to the electronic device so as to provide a connection such that the electronic device can perform cellular communication.

The electronic device may provide the user with a voice call or video call service through the cellular communication.

Document US 2014/187224 A1 (LIU TAO [CN] ET AL) 3 July 2014 discloses a protocol version negotiation method between a terminal and a base station, where the terminal acquires information of a connected cellular network.

### [Disclosure of Invention]

### [Technical Problem]

An electronic device may be connected to a mobile broadband device to perform cellular communication. The electronic device and the mobile broadband device may exchange control data generated according to a protocol (for example, mobile broadband interface model (MBIM)) related to data exchanged between the electronic device and the mobile broadband device, and may perform and/or control cellular communication, based on the control data.

The protocol's version has been developed in accordance with the cellular network's generation (for example, 3G network, long term evolution (LTE) network, new radio (NR) network) or functions (for example, edge computing, network slicing) supported by the cellular network.

Mobile broadband interface model (MBIM) protocols may include MBIM 1.0 supporting LTE networks, MBIM 2.0 supporting NR networks which support a non-standalone (NSA) mode but do not support a standalone (SA) mode, MBIM 3.0 supporting NR networks which support the SA mode's phase 1 (or 3GPP NR Rel. 15) but do not support the SA mode's phase 2 (or 3GPP NR Rel. 16), and MBIM 4.0 supporting NR networks which support the SA mode's phase 2 (or 3GPP NR Rel. 16). The size of control data generated according to the protocol may increase in proportion to the protocol's version. According to an example, control data generated according to a higher version of protocol may have a larger size than control data generated according to a lower version of protocol. This is because, as the cellular network's generation and/or functions supported by the cellular network increase, more data related to functions supported by the cellular network is included.

However, in a situation in which an electronic device generates and/or uses control data through a higher version of protocol, the cellular network connected to the electronic device may fail to support the function corresponding to the higher version of protocol. For example, an electronic device may generate and/or use control data according to MBIM 4.0 supporting NR networks which support the SA mode's phase 2 (or 3GPP NR Rel. 16), but the cellular network (LTE network) connected to the electronic device may not support NR. The electronic device may properly perform cellular communication even if control data is generated and/or used according to MBIM 1.0, but as control data is generated and/or used according to MBIM 4.0, the control data may further include data related to functions not supported by the cellular network, thereby controlling the mobile broadband device. Since control data is generated according to MBIM 4.0, the same may include data related to functions not supported by the cellular network. If control data further includes data related to functions not supported by the cellular network, the time necessary to transmit and/or receive the control data may increase, thereby slowing down the cellular communication, and the memory's efficiency may be decreased by the data related to functions not supported by the cellular network.

Technical problems to be solved by the disclosure are not limited to the above-mentioned technical problems, and other technical problems not mentioned herein will be clearly understood from the following descriptions by those skilled in the art to which the disclosure pertains.

### [Solution to Problem]

An electronic device according to an example may include a communication circuit configured to support cellular communication. The electronic device may include a processor. The electronic device may include a memory configured to store data related to a protocol of data exchanged by the communication circuit and the processor. The communication circuit may acquire information of a cellular network connected to the electronic device. The communication circuit may generate information indicating the version of the protocol, based on the information of the cellular network connected to the electronic device. The communication circuit may transmit the information indicating the version of the protocol to the processor. The communication circuit may receive control data generated according the version of the protocol from the processor. The communication circuit may transmit and/or receive data through the cellular communication, based on the control data.

A method for operating an electronic device according to an example may include an operation of generating, by a communication circuit of the electronic device, information indicating the version of a protocol of data exchanged by the communication circuit and a processor of the electronic device, based on information of a cellular network connected to the electronic device. The method for operating an electronic device may include an operation of transmitting, by the communication circuit, the generated information indicating the version of the protocol to the processor. The method for operating an electronic device may include an operation of receiving, by the communication circuit, control data generated according to the version of the generated protocol from the processor. The method for operating an electronic device may include an operation of transmitting and/or receiving, by the communication circuit, data through the cellular communication, based on the control data.

A computer-readable recording medium configured to store instructions according to an example may include instructions which, when executed by a processor of an electronic device, cause the electronic device to acquire information of a cellular network connected to the electronic device. The instructions may cause the electronic device to generate information indicating the version of the protocol, based on the information of the cellular network connected to the electronic device. The instructions may cause the electronic device to transmit the information indicating the version of the protocol to the processor. The instructions may cause the electronic device to receive control data generated according the version of the protocol from the processor. The instructions may include instructions which cause the electronic device to transmit and/or receive data through the cellular communication, based on the control data.

### [Advantageous Effects of Invention]

An electronic device and a method for operating the electronic device, according to an embodiment, may determine and/or change the version of a protocol related to data exchanged between a communication circuit and a processor, based on information of a cellular network. The determined version of the protocol may be the lowest version among versions of the protocol which can generate data related to the cellular network's generation and/or functions supported by the cellular network. Therefore, the electronic device may reduce (or prevent) the increase in delay time and/or the decrease in memory efficiency, which would otherwise occur if control data generated according to a higher version than the determined version of the protocol is transmitted and/or used.

Advantageous effects obtainable from the disclosure are not limited to the above-mentioned advantageous effects, and other advantageous effects not mentioned herein will be clearly understood from the following descriptions by those skilled in the art to which the disclosure pertains.

### [Brief Description of Drawings]

FIG. 1 is a block diagram of an electronic device according to various embodiments of the disclosure.
FIG. 2 is a block diagram of an electronic device according to an example.
FIG. 3 illustrates an example of determining the version of a protocol between a processor and a communication circuit, based on information of a cellular network, in an electronic device according to an example.
FIG. 4 is an operation flowchart illustrating a method for operating an electronic device according to an example.
FIG. 5 illustrates an operation flowchart illustrating an example of determining the version of a protocol, based on information of a cellular network, in connection with a method for operating an electronic device according to an example.
FIG. 6 is an operation flowchart illustrating a method for operating an electronic device according to an example.

### [Mode for the Invention]

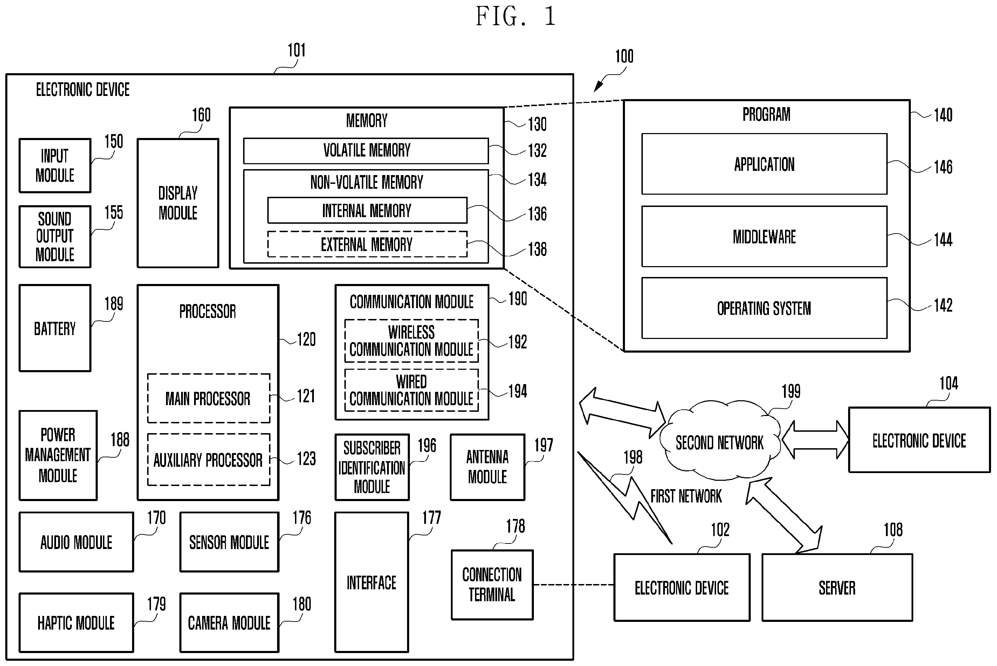

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The processor 120 (e.g., processing circuitry) can be implemented as one or more integrated circuit chips and is capable of performing various data processing tasks. The processor 120 may include at least one electrical circuit (or, electrical circuitry) and can process instructions (or programs, data) stored in the memory 130, either individually or collectively in a distributed manner. The processor 120 may comprise a processor assembly that includes one or more processing circuits. The processor 120 can include any operative processing circuit configured to control the performance and operations of one or more components of the electronic device 101, such as the memory 130, display module 160, sensor module 176 (e.g., sensors), camera module 180 (e.g., image sensors), and/or communication module 190 (e.g., communication circuitry). For example, the processor 120 (e.g., an application processor (AP)) may be implemented as a system on chip (SoC) (e.g., a single chip or chipset). The processor 120 may also be implemented using multiple cores (or at least one core circuit), multiple chips, or multiple chipsets. Additionally, the processor 120 may include one or more processing circuits. For instance, the processor 120 may include one or more processing circuits configured to individually and/or collectively perform various functions of the present disclosure. As a non-limiting example, at least a portion of the processor 120 may be included in a first chip of the electronic device 101, while at least another portion of the processor 120 may be included in a second chip of the electronic device 101 that is different from the first chip.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

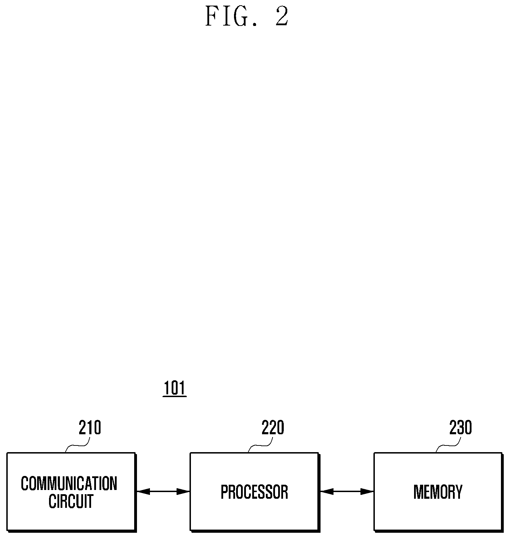

FIG. 2 is a block diagram of an electronic device according to an example.

Referring to FIG. 2, the electronic device (for example, the electronic device 101 in FIG. 1) may include a communication circuit 210 (for example, the communication circuit 192 in FIG. 1), a processor 220 (for example, the processor 120 in FIG. 1), and/or a memory 230 (for example, the memory 130 in FIG. 1).

The memory 230 may store instructions which may be executed by the communication circuit 210 and/or the processor 220. In the following descriptions, operations of the communication circuit 210 and/or the processor 220 may be performed according to execution of the instructions stored in the memory 230.

The communication circuit 210 may support cellular communication such that the electronic device 101 is provided with communication with an external electronic device (for example, the external electronic device 104 in FIG. 1) through cellular communication. The cellular communication may include at least one of third-generation cellular communication (3G), fourth-generation cellular communication (4G), and/or fifth-generation cellular communication (5G).

The communication circuit 210 may include various components for performing cellular communication. According to an embodiment, the communication circuit 210 may include at least one of a communication processor configured to perform processing related to communication functions, a transceiver configured to modulate signals received from the communication processor, and a front-end module configured to amplify modulated signals and filter signals in a specific frequency band.

The communication circuit 210 may be referred to as a mobile broadband (MBB) device. In FIG. 2, the communication circuit 210 is illustrated as a component of the electronic device 101. The communication circuit 210 may also be implemented outside the electronic device 101 and connected to the electronic device 101 in various manners (for example, USB).

The processor 220 may be an entity capable of controlling various components of the electronic device 101. The processor 220 may also be referred to as an application processor. According to an example, the processor 220 may perform various functions, based on data transmitted and/or received through cellular communication. The processor 220 may be connected to the communication circuit 210 operatively or electrically so as to control the communication circuit 210. According to an example, the processor 220 may be connected to the communication circuit 210 through at least one channel. The at least one channel may include a data channel which is a path of exchange of user data (for example, IP data) and/or a control channel which is a path of exchange of control data. The control data may refer to data including at least one piece of data (or parameter) for controlling the communication circuit 210 such that the processor 220 performs cellular communication.

The processor 220 may generate control data for controlling the communication circuit 210 and may transmit the control data to the communication circuit 210. The control data may include commands necessary for the communication circuit 210 to perform functions related to cellular communication (for example, short messaging service (SMS), subscribe identity module (SIM) control, data transmission and/or reception functions, unstructured supplementary service data (USSD) transmission and/or reception functions). The control data may be generated according to a protocol related to data exchanged by the processor 220 and the communication circuit 210. The protocol may be a protocol for exchanging data (including control data) between the communication circuit 210 and the processor 220. According to an example, the protocol related to data exchanged by the processor 220 and the communication circuit 210 may also be referred to as a mobile broadband interface model (MBIM) if the processor 220 operates by using a specific operating system (for example, Windows^{™}).

The version of the protocol related to data exchanged between the processor 220 and the communication circuit 210 has been developed according to the cellular network's generation (for example, 3G network, LTE network, NR network) or functions (for example, edge computing, network slicing) supported by the cellular network. According to an example, MBIM protocols may include MBIM 1.0 supporting LTE networks, MBIM 2.0 supporting NR networks which support a non-standalone (NSA) mode but do not support a standalone (SA) mode, MBIM 3.0 supporting NR networks which support the SA mode's phase 1 (or 3GPP NR Rel. 15) but do not support the SA mode's phase 2 (or 3GPP NR Rel. 16), and MBIM 4.0 supporting NR networks which support the SA mode's phase 2 (or 3GPP NR Rel. 16). The size of control data generated according to the protocol may increase in proportion to the protocol's version. According to an example, control data generated according to a higher version of protocol may have a larger size than control data generated according to a lower version of protocol. This is because, as the cellular network's generation and/or functions supported by the cellular network increase, more data related to functions supported by the cellular network is included.

However, in a situation in which the electronic device 101 generates and/or uses control data through a higher version of protocol, the cellular network connected to the electronic device 101 may fail to support the function corresponding to the higher version of protocol. For example, the electronic device 101 may generate and/or use control data according to MBIM 4.0 supporting NR networks which support the SA mode's phase 2 (or 3GPP NR Rel. 16), but the cellular network (LTE network) connected to the electronic device 101 may not support NR. The electronic device 101 may properly perform cellular communication even if control data is generated and/or used according to MBIM 1.0, but as control data is generated and/or used according to MBIM 4.0, the control data may further include data related to functions not supported by the cellular network, thereby controlling the communication circuit 210. Since control data is generated according to MBIM 4.0, the same may include data related to functions not supported by the cellular network. If control data further includes data related to functions not supported by the cellular network, the time necessary to transmit and/or receive the control data may increase, thereby slowing down the cellular communication, and the efficiency of the memory 130 may be decreased by the data related to functions not supported by the cellular network.

Moreover, a change in the protocol related to data exchanged between the processor 220 and the communication circuit 210 may be implemented according to update (or change) of the firmware or operating system of the processor 220 or the electronic device 101. According to an example, in a state in which the electronic device 101 is configured to generate and/or use control data according to MBIM 1.0, the cellular network connected to the electronic device 101 may be changed. If the changed cellular network supports NR, the electronic device 101 may generate and/or use control data according to MBIM 1.0, and may fail to properly use functions provided by the cellular network. In order for the electronic device 101 to properly use functions provided by the changed cellular network, the protocol needs to be changed through update of the firmware or the operating system. However, update of the firmware or the operating system may consume a considerable time, and cellular communication cannot be performed during that time, thereby inconveniencing the user of the electronic device 101.

Hereinafter, an example in which the version of a protocol of data exchanged by the communication circuit 210 and the processor 220 is determined or changed based on information of the cellular network connected to the electronic device 101, and control data is generated and/or used by using the determined or changed version of the protocol, thereby speeding up the cellular communication and/or increasing the efficiency of the memory 130, will be described.

The communication circuit 210 may determine the version of the protocol, based on information of the cellular network connected to the electronic device 101. The information of the cellular network may include the generation of the cellular network and/or functions supported by the cellular network. Determining the version of the protocol may include changing the version of the protocol negotiated (or promised) between the communication circuit 210 and the processor 220.

As the electronic device 101 is booted, the communication circuit 210 may negotiate with the processor 220 such that control data can be transmitted and/or received by using a specific version of protocol. According to an example, the version of the protocol used by the communication circuit 210 and the processor 220 may be identical to a previously used protocol version (for example, the most recently used protocol version). Alternatively, the version of the protocol used by the communication circuit 210 and the processor 220 may be identical to a preconfigured protocol version.

The communication circuit 210 may perform cellular communication, based on control data generated according to the protocol version, and may receive (or acquire) information of a cellular network, based on a signal transmitted (or broadcast) by the cellular network or by a base station (or node) included in the cellular network.

The signal transmitted (or broadcast) by the base station (or node) may include information indicating the generation of the cellular network. According to an example, information indicating the generation of the network may be included in an MBIMDataClass field included in the signal, and may be implemented as in [Table 1]:

**[Table 1]**

| Field | Information |
|---|---|
| MBIMDataClassHSDPA | Indicates that the cellular network supports highspeed downlink packet access (supports 3^{rd} generation cellular communication) |
| MBIMDataClassHSUPA | Indicates that the cellular network supports highspeed uplink packet access (supports 4^{th} generation cellular communication) |
| MBIMDataClassLTE | Indicates that the cellular network supports LTE (supports 4^{th} generation cellular communication) |
| MBIMDataClass5G_NSA | Indicates that the cellular network supports NSA mode of NR |
| MBIMDataClass5G_SA | Indicates that the cellular network supports SA mode of NR |

The signal transmitted (or broadcast) by the base station may include a master information block (MIB) and/or a system information block (SIB).

According to an example, the communication circuit 210 may receive SIB 1 transmitted (or broadcast) by the base station (or node), and may identify the cellular network's identification information included in SIB 1. The communication circuit 210 may identify the cellular network's information with reference to a memory stored in the communication circuit 210 or mapping data stored in the memory 230. According to an example, the mapping data may refer to data obtained by mapping the cellular network's identification information and the cellular network's generation (or functions supported by the cellular network), and may be implemented as in [Table 2]. Identifying the cellular network's identification information included in SIB 1 is only an embodiment, and the disclosure is not limited thereto. According to an example, the communication circuit 210 may identify the cellular network's identification information by using various signals including the cellular network's identification information, instead of SIB 1.

**[Table 2]**

| Cellular network's identification information | Cellular network's information |
|---|---|
| Cellular network 1 | LTE only is supported. |
| Cellular network 2 | NR's NSA mode is supported. |
| | NR's SA mode is not supported. |
| Cellular network 3 | NR's SA mode is supported. |

According to an example, the communication circuit 210 may identify the cellular network's information with reference to system information transmitted (or broadcast) by the base station (or node), instead of the mapping data.

The communication circuit 210 may determine (or select) that the lowest version among versions of a protocol capable of generating data related to the cellular network's generation and/or functions supported by the cellular network is the version of the protocol to be used to generate and transmit control data.

According to an example, if the cellular network connected to the electronic device 101 supports only LTE, the communication circuit 210 may determine (or select) that, among protocols (for example, MBIM 1.0, MBIM 2.0, MBIM 3.0, and MBIM 4.0) which may be used for cellular communication with a cellular network supporting LTE, the lowest version (for example, MBIM 1.0) is the version of the protocol to be used to generate and transmit control data.

According to an example, if the cellular network connected to the electronic device 101 supports the NSA mode of NR and does not support the SA mode thereof, the communication circuit 210 may determine (or select) that, among protocols (for example, MBIM 2.0, MBIM 3.0, and MBIM 4.0) which may be used for cellular communication with a cellular network supporting the NSA mode of NR, the lowest version (for example, MBIM 2.0) is the version of the protocol to be used to generate and transmit control data.

According to an example, if the cellular network connected to the electronic device 101 supports phase 1 (or Rel. 15) among SA modes of NR and does not support phase 2 (or Rel. 16), the communication circuit 210 may determine (or select) that, among protocols (for example, MBIM 3.0 and MBIM 4.0) which may be used for cellular communication with a cellular network supporting phase 1 among SA modes of NR, the lowest version (for example, MBIM 3.0) is the version of the protocol to be used to generate and transmit control data.

According to an example, if the cellular network connected to the electronic device 101 supports phase 2 (or Rel. 16) among SA modes of NR, the communication circuit 210 may determine (or select) that, among protocols (for example, MBIM 4.0) which may be used for cellular communication with a cellular network supporting phase 2 among SA modes of NR, the lowest version (for example, MBIM 4.0) is the version of the protocol to be used to generate and transmit control data.

The communication circuit 210 may transmit information indicating the determined version of the protocol to the processor 220. Transmitting information indicating the determined version of the protocol to the processor 220 may be intended to change the version of the previously used protocol.

For example, in a situation in which control data generated by using the first version of protocol is received, the communication circuit 210 may stop data exchange between the communication circuit 210 and the processor 220 and/or negotiate the version of the protocol, in order to change the version of the protocol.

The communication circuit 210 may transmit a protocol termination message (for example, MBIM close message) to the processor 220 in order to change the version of the protocol. The processor 220 may receive the protocol termination message from the communication circuit 210 and may transmit a response message (for example, MBIM close done message) to the communication circuit 210. The processor 220 may transmit a protocol starting message (for example, MBIM open message) to the communication circuit 210 in order to activate cellular communication. The communication circuit 210 may receive the protocol starting message from the processor 220 and may transmit a response message (for example, MBIM open done message) to the processor 220.

The communication circuit 210 and the processor 220 may negotiate the version of the protocol after transmitting and/or receiving a response message (for example, MBIM open done message).

The processor 220 may transmit information indicating the version of the protocol which the processor 220 can support to the communication circuit 210 in the protocol version negotiation process.

According to an example, the processor 220 may transmit information indicating the highest version (for example, MBIM 3.0), among versions of the protocol which the processor 220 can support to the communication circuit 210.

According to an example, the communication circuit 210 may receive information indicating the version (for example, MBIM 3.0) of the protocol which the processor 220 can support from the processor 220 in a process of negotiating the determined protocol version, based on information of the cellular network.

The communication circuit 210 may determine the version of the protocol, based on the cellular network's information and the version of the protocol which the processor 220 can support. For example, if the cellular network connected to the electronic device 101 supports only LTE, the communication circuit 210 may determine (or select) that, among protocols (for example, MBIM 1.0, MBIM 2.0, MBIM 3.0, and MBIM 4.0) which may be used for cellular communication with a cellular network supporting LTE, the lowest version (for example, MBIM 1.0) is the version of the protocol to be used to generate and transmit control data.

The communication circuit 210 may transmit information indicating the determined protocol's version to the processor 220. The protocol's version (for example, MBIM 1.0) included in the information indicating the determined protocol's version transmitted by the communication circuit 210 may differ from the version (for example, MBIM 3.0) of the protocol which the processor 220 can support, transmitted by the processor 220. For example, in the case that the processor 220 transmits information indicating the highest version of the protocol that the processor 220 can support, the determined protocol version may be a lower version of the protocol when the information received from the cellular network indicates that a lower version should be used.

The communication circuit 210 may guide the processor 220 such that negotiation is completed with the determined version, by transmitting information indicating the determined version to the processor 220.

The communication circuit 210 and the processor 220 may complete negotiation such that control data is generated and/or exchanged by using the version of the protocol determined based on cellular network information. The communication circuit 210 may receive a control message generated according to the determined version of the protocol from the processor 220, and may perform cellular communication, based on the control message.

In connection with the control message generated according to the determined version of the protocol, data supported in higher versions than the determined version of the protocol may be excluded. For example, if the determined version of the protocol is MBIM 1.0, data (for example, data related to a network slicing function) supported in MBIM 4.0, which is a higher version than the determined version of the protocol, may not be included in the control message. Therefore, if the determined version of the protocol is lower than the preconfigured version of the protocol, control data generated according to the lower version may be transmitted and/or used, thereby reducing (or preventing) the increase in delay time and/or the decrease in memory efficiency, which would otherwise occur if control data generated according to the higher version is transmitted.

In connection with the control message generated according to the determined version of the protocol, data related to a function not supported by the cellular network connected to the electronic device 101 may be excluded. For example, if the predetermined version of the protocol is MBIM 4.0, if the connected cellular network supports only LTE (or if the connected cellular network does not support NR), and if the newly determined version of the protocol is MBIM 1.0, data (for example, single network slice selection assistance information (S-NSSAI)) related to a function (for example, network slicing function) of MBIM 4.0 not supported by the cellular network which supports only LTE may not be included in the control message. Therefore, the electronic device 101 may reduce (or prevent) the increase in delay time and/or the decrease in memory efficiency, which would otherwise occur if control data generated according to the higher version than the determined version of the protocol is transmitted and/or used.

The above-described operation may be performed in a situation in which the electronic device 101 is booted and then connected to a cellular network. However, if the cellular network connected to the electronic device 101 is changed, the electronic device 101 according to the disclosure may perform the above-described operation.

According to an example, the communication circuit 210 may perform cellular communication, based on control data generated according to the first version of the protocol, while being connected to the first (or initial) cellular network. As the cellular network connected to the electronic device 101 is changed, the communication circuit 210 may acquire (or receive) information of the changed cellular network. The communication circuit 210 may determine whether or not to change the version of the protocol, based on information of the changed cellular network. The communication circuit 210 may identify, based on information of the cellular network, whether the version of the protocol corresponding to the cellular network's generation and/or functions supported by the cellular network is identical to the version of the protocol of data exchanged by the communication circuit 210 and the processor 220, and may determine to change the version of the protocol if the versions are not identical.

According to an example, the communication circuit 210 may determine to change the version of the protocol if the generation (for example, LTE network) of the changed cellular network is lower than the generation (for example, NR network) of the previously connected cellular network (or if lower than the generation of the cellular network corresponding to the first version of the protocol).

According to a determination to change the version of the protocol, the communication circuit 210 may transmit a protocol termination message (for example, MBIM close message) to the processor 220 in order to change the version of the protocol. The processor 220 may receive the protocol termination message from the communication circuit 210, and may transmit a response message (for example, MBIM close done message) to the communication circuit 210. The processor 220 may transmit a protocol starting message (for example, MBIM open message) to the communication circuit 210 in order to activate cellular communication. The communication circuit 210 may receive the protocol starting message from the processor 220 and may transmit a response message (for example, MBIM open done message) to the processor 220.

The communication circuit 210 and the processor 220 may negotiate the version of the protocol after transmitting and/or receiving a response message (for example, MBIM open done message).

The processor 220 may transmit information indicating the version of the protocol which the processor 220 can support to the communication circuit 210 in the protocol version negotiation process.

According to an example, the communication circuit 210 may receive information indicating the version of the protocol which the processor 220 can support from the processor 220 in a process of negotiating the determined protocol version based on information of a cellular network. The communication circuit 210 may transmit information indicating the determined protocol version to the processor 220. The version of the protocol included in the information indicating the determined protocol version, transmitted by the communication circuit 210, may differ from the version of the protocol which the processor 220 can support, transmitted by the processor 220. For example, in the case that the processor 220 transmits information indicating the highest version of the protocol that the processor 220 can support, the determined protocol version may be a lower version of the protocol when the information received from the cellular network indicates that a lower version should be used.

The communication circuit 210 may guide the processor 220 such that negotiation is completed with the determined version, by transmitting information indicating the determined version to the processor 220.

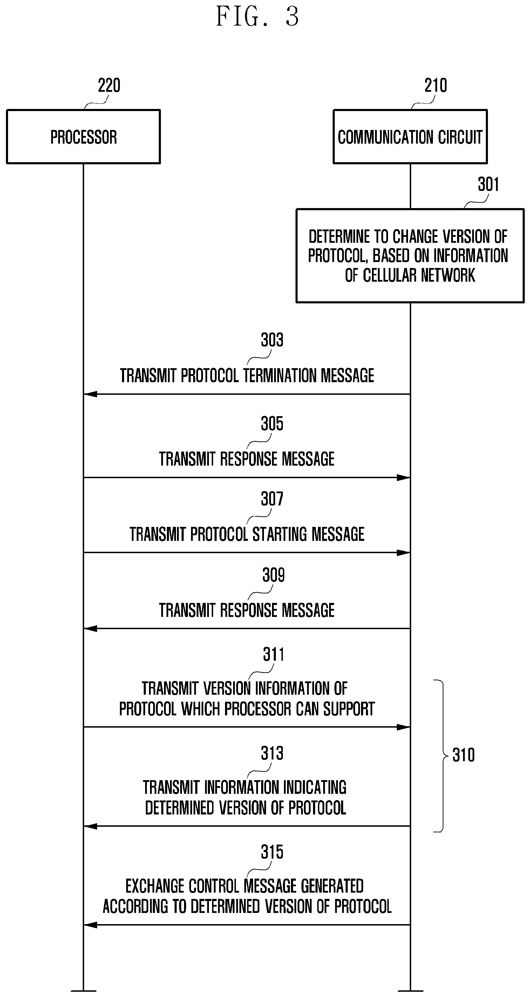

FIG. 3 illustrates an example of determining the version of a protocol between a processor and a communication circuit, based on information of a cellular network, in an electronic device according to an example.

The communication circuit (for example, the communication circuit 210 in FIG. 2) may determine to change the version of the protocol, based on information of the cellular network, in operation 301.

The communication circuit 210 may identify, based on information of the cellular network, whether the version of the protocol corresponding to the cellular network's generation and/or functions supported by the cellular network is identical to the version of the protocol of data exchanged by the communication circuit 210 and the processor (for example, the processor 220 in FIG. 2), and may determine to change the version of the protocol if the versions are not identical.

The communication circuit 210 may determine the version of the protocol, based on information of the cellular network connected to the electronic device 101. The information of the cellular network may include the generation of the cellular network and/or functions supported by the cellular network. Determining the version of the protocol may include changing the version of the protocol negotiated (or promised) between the communication circuit 210 and the processor 220.

As the electronic device 101 is booted, the communication circuit 210 may negotiate with the processor 220 such that control data can be transmitted and/or received by using a specific version of the protocol. According to an example, the version of the protocol used by the communication circuit 210 and the processor 220 may be identical to a previously used protocol version (for example, the most recently used protocol version). Alternatively, the version of the protocol used by the communication circuit 210 and the processor 220 may be identical to the version of a preconfigured protocol version.

The communication circuit 210 may perform cellular communication, based on control data, and may receive (or acquire) information of the cellular network, based on a signal transmitted (or broadcast) by the cellular network or by a base station (or node) included in the cellular network.

The signal transmitted (or broadcast) by the base station (or node) may include information indicating the generation of the cellular network. According to an example, information indicating the generation of the network may be included in an MBIMDataClass field included in the signal.

The signal transmitted (or broadcast) by the base station may include a system information block (SIB) or a master information block (MIB).

According to an example, the communication circuit 210 may receive SIB 1 transmitted (or broadcast) by the base station (or node), and may identify the cellular network's identification information included in SIB 1. The communication circuit 210 may identify the cellular network's information with reference to a memory stored in the communication circuit 210 or mapping data stored in the memory 230. According to an example, the mapping data may refer to data obtained by mapping the cellular network's identification information and the cellular network's generation (or functions supported by the cellular network). Identifying the cellular network's identification information included in SIB 1 so as to acquire information indicating the cellular network's generation is only an embodiment, and the disclosure is not limited thereto. According to an example, the communication circuit 210 may identify the cellular network's identification information by using various signals including the cellular network's identification information, instead of SIB 1.

According to an example, the communication circuit 210 may identify the cellular network's information with reference to system information transmitted (or broadcast) by the base station (or node), instead of the mapping data.

The communication circuit 210 may determine (or select) that the lowest version among versions of a protocol capable of generating data related to the cellular network's generation and/or functions supported by the cellular network is the version of the protocol to be used to generate and transmit control data.

According to an example, if the cellular network connected to the electronic device 101 supports only LTE, the communication circuit 210 may determine (or select) that, among protocols (for example, MBIM 1.0, MBIM 2.0, MBIM 3.0, and MBIM 4.0) which may be used for cellular communication with a cellular network supporting LTE, the lowest version (for example, MBIM 1.0) is the version of the protocol to be used to generate and transmit control data.

According to an example, if the cellular network connected to the electronic device 101 supports the NSA mode of NR and does not support the SA mode thereof, the communication circuit 210 may determine (or select) that, among protocols (for example, MBIM 2.0, MBIM 3.0, and MBIM 4.0) which may be used for cellular communication with a cellular network supporting the NSA mode of NR, the lowest version (for example, MBIM 2.0) is the version of the protocol to be used to generate and transmit control data.

According to an example, if the cellular network connected to the electronic device 101 supports phase 1 (or Rel. 15) among SA modes of NR and does not support phase 2 (or Rel. 16), the communication circuit 210 may determine (or select) that, among protocols (for example, MBIM 3.0 and MBIM 4.0) which may be used for cellular communication with a cellular network supporting phase 1 among SA modes of NR, the lowest version (for example, MBIM 3.0) is the version of the protocol to be used to generate and transmit control data.

According to an example, if the cellular network connected to the electronic device 101 supports phase 2 (or Rel. 16) among SA modes of NR, the communication circuit 210 may determine (or select) that, among protocols (for example, MBIM 4.0) which may be used for cellular communication with a cellular network supporting phase 2 among SA modes of NR, the lowest version (for example, MBIM 4.0) is the version of the protocol to be used to generate and transmit control data.

The communication circuit 210 may transmit a protocol termination message to the processor 220 in operation 303.

The communication circuit 210 may transmit a protocol termination message (for example, MBIM close message) to the processor 220 in order to change the version of the protocol. For example, the communication circuit 210 may transmit the protocol termination message to the processor 220 if it is determined that the version of the protocol should be changed, and may not transmit the protocol termination message to the processor 220 if it is determined that the version of the protocol should not be changed (e.g. if the current version of the protocol is identical to the version of the protocol determined to be used based on the cellular network's information).

The processor (for example, the processor 220 in FIG. 2) may transmit a first response message to the communication circuit 210 in operation 305.

The processor 220 may receive the protocol termination message from the communication circuit 210 and may transmit a first response message (for example, MBIM close done message) to the communication circuit 210. For example, the processor may transmit the first response message in response to receiving the protocol termination message.

The processor 220 may transmit a protocol starting message to the communication circuit 210 in operation 307.

The processor 220 may transmit a protocol starting message (for example, MBIM open message) to the communication circuit 210 in order to activate cellular communication. For example, the processor may transmit the protocol starting message in response to receiving the first response message.

The communication circuit 210 may transmit a second response message to the processor 220 in operation 309.

The communication circuit 210 may receive a protocol starting message from the processor 220 and may transmit a second response message (for example, MBIM open done message) to the processor 220.

The processor 220 may transmit information indicating version information of the protocol which the processor 220 can support to the communication circuit 210 in operation 311.

The communication circuit 210 and the processor 220 may negotiate (310) the version of the protocol after transmitting and/or receiving a response message (for example, MBIM open done message).

The processor 220 may transmit information indicating the version of the protocol which the processor 220 can support to the communication circuit 210 in the protocol version negotiation process.

According to an example, the processor 220 may transmit information indicating the highest version (for example, MBIM 3.0), among versions of the protocol which the processor 220 can support to the communication circuit 210.

According to an example, the communication circuit 210 may receive information indicating the version (for example, MBIM 3.0) of the protocol which the processor 220 can support from the processor 220 in a process of negotiating the determined protocol version, based on information of the cellular network.

The communication circuit 210 may determine the version of the protocol, based on the cellular network's information and the version of the protocol which the processor 220 can support. For example, if the cellular network connected to the electronic device 101 supports only LTE, the communication circuit 210 may determine (or select) that, among protocols (for example, MBIM 1.0, MBIM 2.0, MBIM 3.0, and MBIM 4.0) which may be used for cellular communication with a cellular network supporting LTE, the lowest version (for example, MBIM 1.0) is the version of the protocol to be used to generate and transmit control data.

The communication circuit 210 may transmit information indicating the determined protocol's version to the processor 220 in operation 313.

According to an example, the communication circuit 210 may receive information indicating the version of the protocol which the processor 220 can support from the processor 220 in a process of negotiating the determined protocol version based on information of a cellular network. The communication circuit 210 may transmit information indicating the determined protocol version to the processor 220. The version of the protocol included in the information indicating the determined protocol version, transmitted by the communication circuit 210, may differ from the version of the protocol which the processor 220 can support, transmitted by the processor 220. For example, in the case that the processor 220 transmits information indicating the highest version of the protocol that the processor 220 can support, the determined protocol version may be a lower version of the protocol when the information received from the cellular network indicates that a lower version should be used.

The communication circuit 210 may guide the processor 220 such that negotiation is completed with the determined version, by transmitting information indicating the determined version to the processor 220.

The processor 220 and the communication circuit 210 may exchange a control message generated according to the determined protocol version and may perform cellular communication, based on the control message, in operation 315.

The communication circuit 210 and the processor 220 may complete negotiation such that control data is generated and/or exchanged by using the version of the protocol determined based on cellular network information. The communication circuit 210 may receive a control message generated according to the determined protocol version from the processor 220, and may perform cellular communication (e.g. via the cellular network), based on the control message.

In connection with the control message generated according to the determined version of the protocol, data supported in higher versions than the determined version of the protocol may be excluded. For example, if the determined version of the protocol is MBIM 1.0, data (for example, data related to a network slicing function) supported in MBIM 4.0, which is a higher version than the determined version of the protocol, may not be included in the control message. Therefore, if the determined version of the protocol is lower than the preconfigured version of the protocol, control data generated according to the lower version may be transmitted and/or used, thereby reducing (or preventing) the increase in delay time and/or the decrease in memory efficiency, which would otherwise occur if control data generated according to the higher version is transmitted.

In connection with the control message generated according to the determined version of the protocol, data related to a function not supported by the cellular network connected to the electronic device 101 may be excluded. For example, if the determined version of the protocol is MBIM 1.0, and if the connected cellular network supports only LTE (or if the connected cellular network does not support NR), data related to a function (for example, network slicing function) not supported by the cellular network which supports only LTE may not be included in the control message. Therefore, the electronic device 101 may reduce (or prevent) the increase in delay time and/or the decrease in memory efficiency, which would otherwise occur if control data generated according to the higher version than the determined version of the protocol is transmitted and/or used.

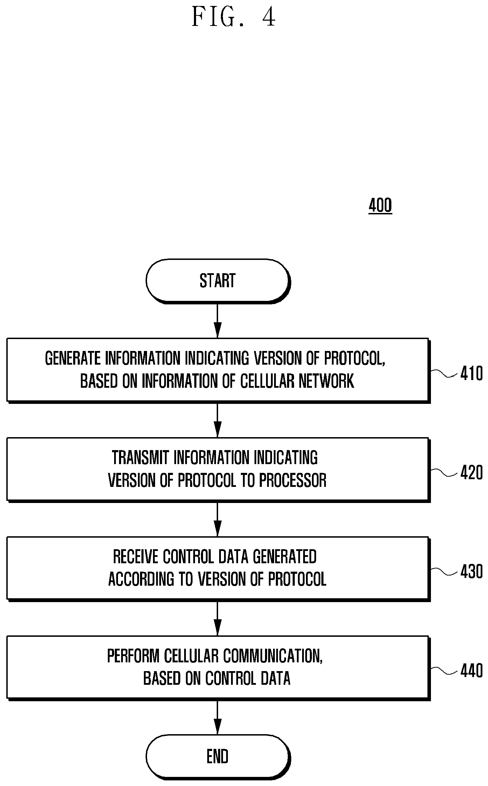

FIG. 4 is an operation flowchart illustrating a method 400 for operating an electronic device according to an example.

The electronic device (for example, the electronic device 101 in FIG. 2) may determine the version of a protocol, based on information of a cellular network, in operation 410. For example, the electronic device 101 (or communication circuit 210) may acquire information of a cellular network connected to the electronic device 101, and may generate, based on the acquired information of the cellular network, information indicating a version of the protocol.

The electronic device 101 may identify, based on information of the cellular network, whether the version of the protocol corresponding to the cellular network's generation and/or functions supported by the cellular network is identical to the version of the protocol of data exchanged by a communication circuit (for example, the communication circuit 210 in FIG. 2) and a processor (for example, the processor 220 in FIG. 2), and may determine to change the version of the protocol if the versions are not identical.

Upon determining to change the version of the protocol, the electronic device 101 may determine to change the version of the protocol to the version of the protocol corresponding to the cellular network's generation and/or functions supported by the cellular network, based on information of the cellular network.

As the electronic device 101 is booted, the communication circuit 210 may negotiate with the processor 220 such that control data can be transmitted and/or received by using a specific version of protocol. According to an example, the version of the protocol used by the communication circuit 210 and the processor 220 may be identical to a previously used protocol version (for example, the most recently used protocol version). Alternatively, the version of the protocol used by the communication circuit 210 and the processor 220 may be identical to a preconfigured protocol version.

The electronic device 101 may perform cellular communication, based on control data, and may receive (or acquire) information of a cellular network, based on a signal transmitted (or broadcast) by the cellular network or by a base station (or node) included in the cellular network.

The signal transmitted (or broadcast) by the base station (or node) may include information indicating the generation of the cellular network. According to an example, information indicating the generation of the network may be included in an MBIMDataClass field included in the signal.

The signal transmitted (or broadcast) by the base station may include a system information block (SIB).

According to an example, the electronic device 101 may receive SIB 1 transmitted (or broadcast) by the base station (or node), and may identify the cellular network's identification information included in SIB 1. The electronic device 101 may identify the cellular network's information with reference to a memory stored in the communication circuit 210 or mapping data stored in the memory 230. According to an example, the mapping data may refer to data obtained by mapping the cellular network's identification information and the cellular network's generation (or functions supported by the cellular network). Identifying the cellular network's identification information included in SIB 1 is only an embodiment, and the disclosure is not limited thereto. According to an example, the communication circuit 210 may identify the cellular network's identification information by using various signals including the cellular network's identification information, instead of SIB 1.

According to an example, the electronic device 101 may identify the cellular network's information with reference to system information transmitted (or broadcast) by the base station (or node), instead of the mapping data.

The electronic device 101 may determine (or select) that the lowest version among versions of a protocol capable of generating data related to the cellular network's generation and/or functions supported by the cellular network is the version of the protocol to be used to generate and transmit control data.

According to an example, if the cellular network connected to the electronic device 101 supports only LTE, the electronic device 101 may determine (or select) that, among protocols (for example, MBIM 1.0, MBIM 2.0, MBIM 3.0, and MBIM 4.0) which may be used for cellular communication with a cellular network supporting LTE, the lowest version (for example, MBIM 1.0) is the version of the protocol to be used to generate and transmit control data.

According to an example, if the cellular network connected to the electronic device 101 supports the NSA mode of NR and does not support the SA mode thereof, the electronic device 101 may determine (or select) that, among protocols (for example, MBIM 2.0, MBIM 3.0, and MBIM 4.0) which may be used for cellular communication with a cellular network supporting the NSA mode of NR, the lowest version (for example, MBIM 2.0) is the version of the protocol to be used to generate and transmit control data.

According to an example, if the cellular network connected to the electronic device 101 supports phase 1 (or Rel. 15) among SA modes of NR and does not support phase 2 (or Rel. 16), the electronic device 101 may determine (or select) that, among protocols (for example, MBIM 3.0 and MBIM 4.0) which may be used for cellular communication with a cellular network supporting phase 1 among SA modes of NR, the lowest version (for example, MBIM 3.0) is the version of the protocol to be used to generate and transmit control data.

According to an example, if the cellular network connected to the electronic device 101 supports phase 2 (or Rel. 16) among SA modes of NR, the electronic device 101 may determine (or select) that, among protocols (for example, MBIM 4.0) which may be used for cellular communication with a cellular network supporting phase 2 among SA modes of NR, the lowest version (for example, MBIM 4.0) is the version of the protocol to be used to generate and transmit control data.

The electronic device 101 may transmit information indicating the determined protocol version to the processor 220 in operation 420. For example, the electronic device 101 (or communication circuit 210) may transmit the generated information indicating the version of the protocol to the processor 220.

The communication circuit 210 and the processor 220 may negotiate (310) the version of the protocol after transmitting and/or receiving a response message (for example, MBIM open done message).

The processor 220 may transmit information indicating the version of the protocol which the processor 220 can support to the communication circuit 210 in the protocol version negotiation process. For example, the communication circuit 210 may receive, from the processor 220, information indicating at least one version of the protocol that the processor 220 supports, and the communication circuit 210 may determine a version of the protocol based on the acquired information of the cellular network and the received information indicating the at least one version of the protocol that the processor 220 supports.

According to an example, the processor 220 may transmit information indicating the highest version (for example, MBIM 3.0), among versions of the protocol which the processor 220 can support to the communication circuit 210.

According to an example, the communication circuit 210 may receive information indicating the version (for example, MBIM 3.0) of the protocol which the processor 220 can support from the processor 220 in a process of negotiating the determined protocol version, based on information of the cellular network.

The communication circuit 210 may determine the version of the protocol, based on the cellular network's information and the version of the protocol which the processor 220 can support. For example, if the cellular network connected to the electronic device 101 supports only LTE, the communication circuit 210 may determine (or select) that, among protocols (for example, MBIM 1.0, MBIM 2.0, MBIM 3.0, and MBIM 4.0) which may be used for cellular communication with a cellular network supporting LTE, the lowest version (for example, MBIM 1.0) is the version of the protocol to be used to generate and transmit control data.

The communication circuit 210 may transmit information indicating the determined protocol's version to the processor 220. The protocol's version (for example, MBIM 1.0) included in the information indicating the determined protocol's version transmitted by the communication circuit 210 may differ from the version (for example, MBIM 3.0) of the protocol which the processor 220 can support, transmitted by the processor 220. For example, in the case that the processor 220 transmits information indicating the highest version of the protocol that the processor 220 can support, the determined protocol version may be a lower version of the protocol when the information received from the cellular network indicates that a lower version should be used.

The communication circuit 210 may guide the processor 220 such that negotiation is completed with the determined version, by transmitting information indicating the determined version to the processor 220.

The electronic device 101 may receive control data generated according to the determined version of the protocol in operation 430. For example, the electronic device 101 (or communication circuit 210) may receive, from the processor 220, control data generated according to the indicated version of the protocol.

In connection with the control message generated according to the determined version of the protocol, data supported in higher versions than the determined version of the protocol may be excluded. For example, if the determined version of the protocol is MBIM 1.0, data (for example, data related to a network slicing function) supported in MBIM 4.0, which is a higher version than the determined version of the protocol, may not be included in the control message. Therefore, if the determined version of the protocol is lower than the preconfigured version of the protocol, control data generated according to the lower version may be transmitted and/or used, thereby reducing (or preventing) the increase in delay time and/or the decrease in memory efficiency, which would otherwise occur if control data generated according to the higher version is transmitted and/or used.

In connection with the control message generated according to the determined version of the protocol, data related to a function not supported by the cellular network connected to the electronic device 101 may be excluded. For example, if the determined version of the protocol is MBIM 1.0, and if the connected cellular network supports only LTE (or if the connected cellular network does not support NR), data related to a function (for example, network slicing function) of MBIM 4.0 not supported by the cellular network which supports only LTE may not be included in the control message. Therefore, the electronic device 101 may reduce (or prevent) the increase in delay time and/or the decrease in memory efficiency, which would otherwise occur if control data generated according to the higher version than the determined version of the protocol is transmitted and/or used.

The electronic device 101 may perform cellular communication, based on the control data, in operation 440. For example, the electronic device 101 (or communication circuit 210) may transmit and/or receive data through the cellular communication based on the control data.

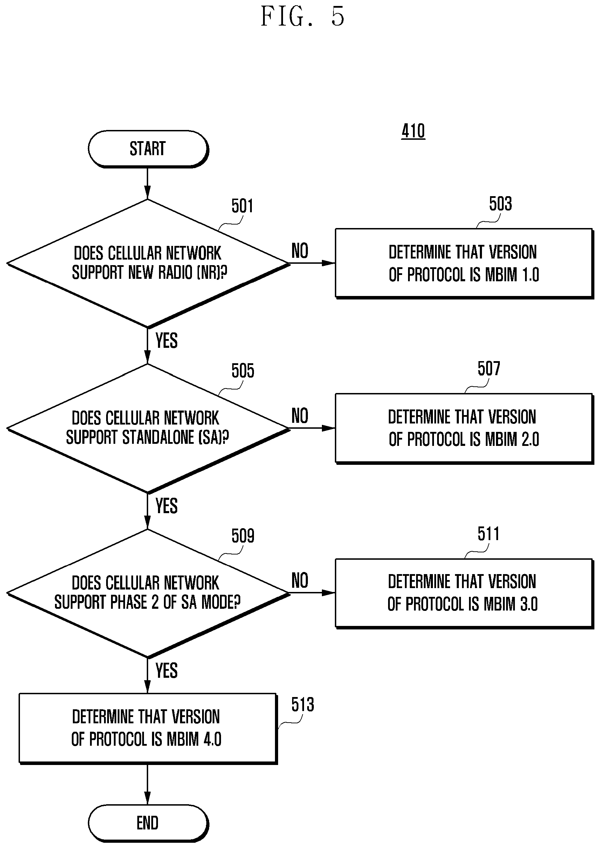

FIG. 5 illustrates an operation flowchart illustrating an example of an operation 410 of determining the version of a protocol, based on information of a cellular network, in connection with a method for operating an electronic device according to an example.

The electronic device (for example, the electronic device 101 in FIG. 2) may identify whether the cellular network supports new radio (NR) in operation 501.

The electronic device 101 may determine that the protocol's version is MBIM 1.0 in operation 503 upon identifying that the cellular network does not support new radio (NR) (NO in operation 501).

According to an example, if the cellular network connected to the electronic device 101 supports only LTE, the electronic device 101 may determine (or select) that, among protocols (for example, MBIM 1.0, MBIM 2.0, MBIM 3.0, and MBIM 4.0) which may be used for cellular communication with a cellular network supporting LTE, the lowest version (for example, MBIM 1.0) is the version of the protocol to be used to generate and transmit control data.

The electronic device 101 may identify whether the cellular network supports the standalone (SA) mode in operation 505 upon identifying that the cellular network support new radio (NR) (YES in operation 501).

The electronic device 101 may determine that the protocol's version is MBIM 2.0 in operation 507 upon identifying that the cellular network does not support the SA mode (NO in operation 505).

If the cellular network does not support the SA mode, the cellular network may support the NSA mode. The SA mode may refer to a mode in which the electronic device 101 may perform cellular communication through a connection to a base station supporting NR, without a connection to a base station supporting LTE. The NSA mode may refer to a mode in which the electronic device 101 is connected to a base station supporting LTE and a base station supporting NR, thereby performing cellular communication.

The electronic device 101 may identify whether the cellular network supports phase 2 of the SA mode in operation 509 upon identifying that the cellular network supports the SA mode (YES in operation 505).

The electronic device 101 may determine that the protocol's version is MBIM 3.0 in operation 511 upon identifying that the cellular network does not support phase 2 of the SA mode (NO in operation 509).

According to an example, if the cellular network connected to the electronic device 101 supports phase 1 (or Rel. 15) among SA modes of NR and does not support phase 2 (or Rel. 16), the communication circuit 210 may determine (or select) that, among protocols (for example, MBIM 3.0 and MBIM 4.0) which may be used for cellular communication with a cellular network supporting phase 1 among SA modes of NR, the lowest version (for example, MBIM 3.0) is the version of the protocol to be used to generate and transmit control data.

The electronic device 101 may determine that the protocol's version is MBIM 4.0 in operation 513 if the cellular network supports phase 2 of the SA mode (YES in operation 509).

According to an example, if the cellular network connected to the electronic device 101 supports phase 2 (or Rel. 16) among SA modes of NR, the communication circuit 210 may determine (or select) that, among protocols (for example, MBIM 4.0) which may be used for cellular communication with a cellular network supporting phase 2 among SA modes of NR, the lowest version (for example, MBIM 4.0) is the version of the protocol to be used to generate and transmit control data.

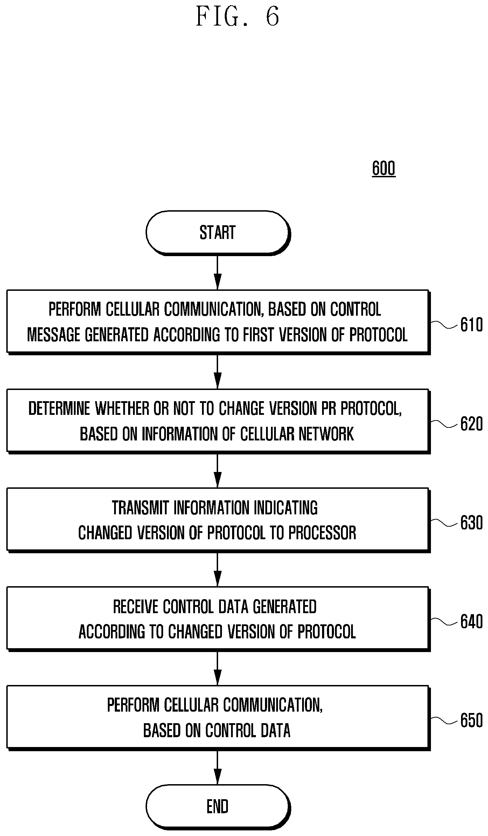

FIG. 6 is an operation flowchart illustrating a method 600 for operating an electronic device according to an example.

The electronic device (for example, the electronic device 101 in FIG. 2) may perform cellular communication, based on a control message generated according to the first version of a protocol, in operation 610.

According to an example, the electronic device 101 may perform cellular communication, based on a control message generated according to the first version of a protocol, while being connected to a first cellular network.

As the cellular network connected to the electronic device 101 is changed, the communication circuit 210 may acquire (or receive) information of the changed cellular network.

The electronic device 101 may determine whether or not to change the protocol version, based on information of the cellular network, in operation 620.

The electronic device 101 may determine whether or not to change the protocol version, based on information of the changed cellular network. The electronic device 101 may identify, based on information of the cellular network, whether the version of the protocol corresponding to the cellular network's generation and/or functions supported by the cellular network is identical to the version of the protocol of data exchanged by the communication circuit 210 and the processor 220, and may determine to change the version of the protocol if the versions are not identical.

According to an example, the electronic device 101 may determine to change the version of the protocol if the generation (for example, LTE network) of the changed cellular network is lower than the generation (for example, NR network) of the previously connected cellular network (or if lower than the generation of the cellular network corresponding to the first version of the protocol).

Based on a determination to change the version of the protocol, the electronic device 101 may control the communication circuit 210 so as to transmit information indicating the changed version of the protocol to the processor 220 in operation 630.

The electronic device 101 may control the communication circuit 210 so as to transmit a protocol termination message (for example, MBIM close message) to the processor 220 in order to change the version of the protocol according to the determination to change the version of the protocol. The processor 220 may receive the protocol termination message from the communication circuit 210 and may transmit a response message (for example, MBIM close done message) to the communication circuit 210. The processor 220 may transmit a protocol starting message (for example, MBIM open message) to the communication circuit 210 in order to activate cellular communication. The electronic device 101 may receive the protocol starting message from the processor 220 and may control the communication circuit 210 so as transmit a response message (for example, MBIM open done message) to the processor 220.

The communication circuit 210 and the processor 220 may negotiate the version of the protocol after transmitting and/or receiving a response message (for example, MBIM open done message).

The processor 220 may transmit information indicating the version of the protocol which the processor 220 can support to the communication circuit 210 in the protocol version negotiation process.

According to an example, the processor 220 may transmit information indicating the highest version (for example, MBIM 3.0), among versions of the protocol which the processor 220 can support to the communication circuit 210.

According to an example, the communication circuit 210 may receive information indicating the version of the protocol which the processor 220 can support from the processor 220 in a process of negotiating the determined protocol version, based on information of the cellular network.

The communication circuit 210 may determine the version of the protocol, based on the cellular network's information and the version of the protocol which the processor 220 can support. For example, if the cellular network connected to the electronic device 101 supports only LTE, the communication circuit 210 may determine (or select) that, among protocols (for example, MBIM 1.0, MBIM 2.0, MBIM 3.0, and MBIM 4.0) which may be used for cellular communication with a cellular network supporting LTE, the lowest version (for example, MBIM 1.0) is the version of the protocol to be used to generate and transmit control data.

The electronic device 101 may control the communication circuit 210 so as to transmit information indicating the determined protocol version. The version of the protocol included in the information indicating the determined protocol version, transmitted by the communication circuit 210, may differ from the version of the protocol which the processor 220 can support, transmitted by the processor 220. For example, in the case that the processor 220 transmits information indicating the highest version of the protocol that the processor 220 can support, the determined protocol version may be a lower version of the protocol when the information received from the cellular network indicates that a lower version should be used.

The communication circuit 210 may guide the processor 220 such that negotiation is completed with the determined version, by transmitting information indicating the determined version to the processor 220.

The electronic device 101 may control the communication circuit 210 so as to receive control data generated according to the changed protocol version in operation 640.

In connection with a control message generated according to the determined version of the protocol, data supported in higher versions than the determined version of the protocol may be excluded. For example, if the determined version of the protocol is MBIM 1.0, data (for example, data related to a network slicing function) supported in MBIM 4.0, which is a higher version than the determined version of the protocol, may not be included in the control message. Therefore, if the determined version of the protocol is lower than the preconfigured version of the protocol, control data generated according to the lower version may be transmitted and/or used, thereby reducing (or preventing) the increase in delay time and/or the decrease in memory efficiency, which would otherwise occur if control data generated according to the higher version is transmitted.

In connection with the control message generated according to the determined version of the protocol, data related to a function not supported by the cellular network connected to the electronic device 101 may be excluded. For example, if the predetermined version of the protocol is MBIM 1.0, and if the connected cellular network supports only LTE (or if the connected cellular network does not support NR), data related to a function (for example, network slicing function) not supported by the cellular network which supports only LTE may not be included in the control message. Therefore, the electronic device 101 may reduce (or prevent) the increase in delay time and/or the decrease in memory efficiency, which would otherwise occur if control data generated according to the higher version than the determined version of the protocol is transmitted and/or used.

The electronic device 101 may control the communication circuit 210 so as to perform cellular communication, based on control data, in operation 650.

In a first example, an electronic device 101 according to an example may include a communication circuit 210 configured to support cellular communication. The electronic device 101 may include a processor 220. The electronic device 101 may include a memory 230 configured to store data related to a protocol of data exchanged by the communication circuit 210 and the processor 220. The communication circuit 210 may acquire information of a cellular network connected to the electronic device. The communication circuit 210 may generate information indicating the version of the protocol, based on the information of the cellular network connected to the electronic device. The communication circuit 210 may transmit the information indicating the version of the protocol to the processor 220. The communication circuit 210 may receive control data generated according the version of the protocol from the processor 220. The communication circuit 210 may transmit and/or receive data through the cellular communication, based on the control data.

In connection with the electronic device 101 according to an example, the control data may be generated according to the version of the protocol such that data supported by a version higher than the version of the protocol is excluded from the control data.

In connection with the electronic device 101 according to an example, the control data may be generated according to the version of the protocol such that data related to a function not supported by the cellular network is excluded from the control data.

In connection with the electronic device 101 according to an example, the communication circuit 210 may be configured to transmit and/or receive a message from which data supported by a version higher than the determined version of the protocol is excluded, to/from the processor 220.

In connection with the electronic device 101 according to an example, the communication circuit 210 may transmit and/or receive control data generated according to version of the protocol to/from the processor 220 as the electronic device is booted. The communication circuit 210 may receive information of the cellular network connected to the electronic device. The communication circuit 210 may determine whether or not to change version of the protocol of the data, based on the information of the cellular network. The communication circuit 210 may transmit information indicating the changed version of the protocol of the data to the processor 220 according to a determination to change the version of the protocol of the data. The communication circuit 210 may receive control data generated according to the changed version of the protocol from the processor 220.

The communication circuit 210 may be configured to transmit and/or receive data via the cellular communication, based on the control data generated according to the changed version of the protocol.

In connection with the electronic device 101 according to an example, the communication circuit 210 may be configured to determine whether or not to change the version of the protocol of the data, based on the information of the changed cellular network, according to changing of the cellular communication connected to the electronic device. The communication circuit 210 may transmit information indicating the changed version of the protocol to the processor 220 according to the determination to change the version of the protocol of the data. The communication circuit 210 may receive control data generated according to the changed version of the protocol from the processor 220. The communication circuit 210 may be configured to transmit and/or receive data via the cellular communication, based on the control data generated according to the changed version of the protocol.

In connection with the electronic device 101 according to an example, the information of the cellular network may include information indicating the generation of the cellular network and/or functions supported by the cellular network.

In connection with the electronic device 101 according to an example, the version of the protocol may be determined based on the generation of the cellular network and/or functions supported by the cellular network.

In connection with the electronic device 101 according to an example, the protocol of the data may include a mobile broadband interface model (MBIM).

In connection with the electronic device 101 according to an example, the communication circuit 210 may determine that the version of the protocol is mobile broadband interface model (MBIM) 1.0 if the cellular network supports long-term evolution (LTE) and does not support new radio (NR). The communication circuit 210 may determine that the version of the protocol is MBIM 2.0 if the cellular network supports the NSA mode of NR and does not support the SA mode thereof. The communication circuit 210 may be configured to determine that the version of the protocol is MBIM 3.0 if the cellular network supports the SA mode of NR.

A method for operating an electronic device 101 according to an embodiment may include an operation of generating, by a communication circuit 210 of the electronic device, information indicating the version of a protocol of data exchanged by the communication circuit 210 and a processor 220 of the electronic device, based on information of a cellular network connected to the electronic device. The method for operating an electronic device 101 may include an operation of transmitting, by the communication circuit 210, the generated information indicating the version of the protocol to the processor 220. The method for operating an electronic device 101 may include an operation of receiving, by the communication circuit 210, control data generated according to the version of the generated protocol from the processor 220. The method for operating an electronic device 101 may include an operation of transmitting and/or receiving, by the communication circuit 210, data through the cellular communication, based on the control data.

In connection with the method for operating electronic device 101 according to an example, the control data may be generated according to the version of the protocol such that data supported by a version higher than the version of the protocol is excluded from the control data.

In connection with the method for operating electronic device 101 according to an example, the control data may be generated according to the version of the protocol such that data related to a function not supported by the cellular network is excluded from the control data.

The method for operating electronic device 101 according to an example may further include an operation of transmitting and/or receiving a message to/from the processor 220, data supported by a version higher than the version of the protocol being excluded from the message.

The method for operating electronic device 101 according to an example may include an operation of transmitting and/or receiving control data generated according to the version of the protocol to/from the processor 220 as the electronic device is booted. The method for operating electronic device 101 may include an operation of receiving information of a cellular network connected to the electronic device. The method for operating electronic device 101 may include an operation of determining whether to change the version of the protocol of the data, based on the information of the cellular network. The method for operating electronic device 101 may include an operation of transmitting information indicating the changed protocol of the data to the processor 220 according to a determination to change the version of the protocol of the data. The method for operating electronic device 101 may include an operation of receiving control data generated according to the changed version of the protocol from the processor 220. The method for operating electronic device 101 may include an operation of transmitting and/or receiving data via the cellular communication, based on the control data generated according to the changed version of the protocol.

The method for operating electronic device 101 according to an example may include an operation of determining whether to change version of the protocol of the data, based on the information of the changed cellular network, according to changing of the cellular communication connected to the electronic device. The method for operating electronic device 101 may include an operation of transmitting information indicating the changed protocol of the data to the processor 220 according to a determination to change the version of the protocol of the data. The method for operating electronic device 101 may include an operation of receiving control data generated according to the changed version of the protocol form the processor 220. The method for operating electronic device 101 may include an operation of transmitting and/or receiving data via the cellular communication, based on the control data generated according to the changed version of the protocol.

In connection with the method for operating electronic device 101 according to an example, the information of the cellular network may include information indicating the generation of the cellular network and/or functions supported by the cellular network.

In connection with the method for operating electronic device 101 according to an example, the version of the protocol may be determined based on the generation of the cellular network and/or functions supported by the cellular network.

In connection with the method for operating electronic device 101 according to an example, the protocol of the data may include a mobile broadband interface model (MBIM). The operation of determining the version of the protocol may include an operation of determining that the version of the protocol is broadband interface model (MBIM) 1.0 if the cellular network supports long-term evolution (LTE) and does not support new radio (NR). The operation of determining the version of the protocol may include an operation of determining that the version of the protocol is MBIM 2.0 if the cellular network supports an NSA mode of NR does not support an SA mode thereof. The operation of determining the version of the protocol may include an operation of determining that the version of the protocol is MBIM 3.0 if the cellular network supports the SA mode of NR.

A computer-readable recording medium configured to store instructions according to an example may include instructions which, when executed by a processor 220 of an electronic device, cause the electronic device to acquire information of a cellular network connected to the electronic device. The instructions may cause the electronic device to generate information indicating the version of the protocol, based on the information of the cellular network connected to the electronic device. The instructions may cause the electronic device to transmit the information indicating the version of the protocol to the processor 220. The instructions may cause the electronic device to receive control data generated according the version of the protocol from the processor 220. The instructions may include instructions which cause the electronic device to transmit and/or receive data through the cellular communication, based on the control data.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a communication circuit (210) for supporting cellular communication;
processor (220); and
memory (230) configured to store data related to protocol of data exchanging between the communication circuit and the processor;
wherein the communication circuit is configured to:
acquire information of a cellular network connected to the electronic device,
generate, based on the acquired information of the cellular network, information indicating a version of a protocol for exchanging data between the communication circuit and the processor,
transmit the generated information indicating the version of the protocol to the processor,
receive, from the processor, control data generated according to the indicated version of the protocol, and
transmit and/or receive data through the cellular communication based on the control data.

2. The electronic device of claim 1, wherein the control data is generated according to the indicated version of the protocol such that data supported by version higher than the version of the protocol is excluded from the control data.

3. The electronic device of claim 1 or 2, wherein the control data is generated according to the indicated version of the protocol such that data related to function being not supported by the cellular network is excluded from the control data.

4. The electronic device of any of claims 1 to 3, wherein the communication circuit is further configured to:
transmit a protocol termination message to the processor;
receive, from the processor, a first response message;
receive, from the processor, a protocol starting message;
transmit, in response to receiving the protocol starting message, a second response message to the processor; and
transmit the generated information indicating the version of the protocol to the processor.

5. The electronic device of any of claims 1 to 4, wherein the communication circuit is further configured to:
transmit and/or receive control data generated according to an initial version of the protocol to/from the processor when the electronic device is booted,
wherein generating the information indicating the version of the protocol comprises determining whether to change the version of the protocol based on the acquired information of the cellular network, and generating the information indicating the version of the protocol, wherein the information indicating the version of the protocol indicates the changed version of the protocol.

6. The electronic device of any of claims 1 to 5, wherein the communication circuit is further configured to:
transmit and/or receive control data generated according to the version of the protocol to/from the processor,
, determine, in the case that it is determined that the cellular network is changed, whether to change version of the protocol based on the information of the changed cellular network,
transmit, to the processor, in the case that it is determined to change the version of the protocol, information indicating the changed version of the protocol,
receive, from the processor, control data generated according to the changed version of the protocol, and
transmit and/or receive data via the cellular communication based on the control data generated according to the changed version of the protocol.

7. The electronic device of any of claims 1 to 6, wherein the information of the cellular network includes a generation of the cellular network and/or a function supported by the cellular network.

8. The electronic device of any of claims 1 to 7, wherein the version of the protocol is determined based on a generation of the cellular network and/or a function supported by the cellular network.

9. The electronic device of any of claims 1 to 8, wherein the protocol includes a mobile broadband interface model (MBIM) protocol.

10. The electronic device of claim 9, wherein the communication circuit is further configured to:
determine the version of the protocol as MBIM 1.0 if the cellular network supports long-term evolution (LTE) and does not support new radio (NR),
determine the version of the protocol as MBIM 2.0 if the cellular network supports non-standalone (NSA) mode of NR and does not support standalone (SA) mode of NR, and
determine the version of the protocol as MBIM 3.0 if the cellular network supports SA mode of NR.

11. The electronic device of any of claims 1 to 10, wherein the communication circuit is further configured to receive, from the processor, information indicating at least one version of the protocol that the processor supports,
wherein generating the information indicating the version of the protocol comprises determining a version of the protocol based on the acquired information of the cellular network and the received information indicating the at least one version of the protocol that the processor supports.

12. A method for operating an electronic device, the method comprising:
generating, by a communication circuit of the electronic device, information indicating a version of a protocol for exchanging data between the communication circuit and a processor, based on information of a cellular network connected to the electronic device;
transmitting, by the communication circuit, the generated information indicating the version of the protocol to the processor;
receiving, by the communication circuit, control data generated according to the version of the protocol from the processor; and
transmitting and/or receiving, by the communication circuit, data through the cellular communication, based on the control data.

13. The method of claim 12, wherein the control data is generated according to the indicated version of the protocol such that:
data supported by a version higher than the version of the protocol is excluded from the control data.

14. The method of claim 12 and claim 13, wherein the control data is generated according to the version of the protocol such that data related to a function not supported by the cellular network is excluded from the control data.

15. A computer-readable recording medium configured to store instructions,
wherein the instructions comprise instructions which, when executed by at least one processor of an electronic device, cause the electronic device to:
acquire information of a cellular network connected to the electronic device;
generate, based on the acquired information of the cellular network, information indicating a version of the protocol for exchanging data between a communication circuit of the electronic device and a processor;
transmit the generated information indicating the version of the protocol to the processor;
receive control data generated according to the indicated version of the protocol from the processor; and
transmit and/or receive data through the cellular communication, based on the control data.

## Patentansprüche

1. Elektronische Vorrichtung, umfassend:
eine Kommunikationsschaltung (210) zum Unterstützen von Mobilfunkkommunikation;
Prozessor (220); und
Speicher (230), der dazu konfiguriert ist, Daten zu speichern, die sich auf ein Protokoll zum Datenaustausch zwischen der Kommunikationsschaltung und dem Prozessor beziehen;
wobei die Kommunikationsschaltung zu Folgendem konfiguriert ist:
Erlangen von Informationen eines mit der elektronischen Vorrichtung verbundenen Mobilfunknetzes,
Generieren von Informationen, die eine Version eines Protokolls zum Austauschen von Daten zwischen der Kommunikationsschaltung und dem Prozessor angeben, basierend auf den erlangten Informationen des Mobilfunknetzes,
Übertragen der generierten Informationen, die die Version des Protokolls angeben, an den Prozessor,
Empfangen von Steuerdaten, die gemäß der angegebenen Version des Protokolls generiert wurden, von dem Prozessor und
Übertragen und/oder Empfangen von Daten mittels der Mobilfunkkommunikation basierend auf den Steuerdaten.

2. Elektronische Vorrichtung nach Anspruch 1, wobei die Steuerdaten gemäß der angegebenen Version des Protokolls derart generiert werden, dass Daten, die durch eine höhere Version als die Version des Protokolls unterstützt werden, aus den Steuerdaten ausgeschlossen werden.

3. Elektronische Vorrichtung nach Anspruch 1 oder 2, wobei die Steuerdaten gemäß der angegebenen Version des Protokolls derart generiert werden, dass Daten, die sich darauf beziehen, dass eine Funktion nicht durch das Mobilfunknetz unterstützt wird, aus den Steuerdaten ausgeschlossen werden.

4. Elektronische Vorrichtung nach einem der Ansprüche 1 bis 3, wobei die Kommunikationsschaltung ferner zu Folgendem konfiguriert ist:
Übertragen einer Protokollbeendigungsnachricht an den Prozessor;
Empfangen einer ersten Antwortnachricht von dem Prozessor;
Empfangen einer Protokollstartnachricht von dem Prozessor;
Übertragen einer zweiten Antwortnachricht an den Prozessor als Reaktion auf das Empfangen der Protokollstartnachricht; und
Übertragen der generierten Informationen, die die Version des Protokolls angeben, an den Prozessor.

5. Elektronische Vorrichtung nach einem der Ansprüche 1 bis 4, wobei die Kommunikationsschaltung ferner zu Folgendem konfiguriert ist:
Übertragen und/oder Empfangen von Steuerdaten, die gemäß einer anfänglichen Version des Protokolls generiert wurden, an den/von dem Prozessor, wenn die elektronische Vorrichtung hochgefahren wird,
wobei das Generieren der Informationen, die die Version des Protokolls angeben, Bestimmen, ob die Version des Protokolls basierend auf den erlangten Informationen des Mobilfunknetzes zu ändern ist, und Generieren der Informationen, die die Version des Protokolls angeben, umfasst, wobei die Informationen, die die Version des Protokolls angeben, die geänderte Version des Protokolls angeben.

6. Elektronische Vorrichtung nach einem der Ansprüche 1 bis 5, wobei die Kommunikationsschaltung ferner zu Folgendem konfiguriert ist:
Übertragen und/oder Empfangen von Steuerdaten, die gemäß der Version des Protokolls generiert wurden, an den/von dem Prozessor,
in dem Fall, dass bestimmt wird, dass das Mobilfunknetz geändert wird, Bestimmen, ob die Version des Protokolls basierend auf den Informationen des geänderten Mobilfunknetzes zu ändern ist,
in dem Fall, dass bestimmt wird, die Version des Protokolls zu ändern, Übertragen von Informationen, die die geänderte Version des Protokolls angeben, an den Prozessor,
Empfangen von Steuerdaten, die gemäß der geänderten Version des Protokolls generiert wurden, von dem Prozessor und
Übertragen und/oder Empfangen von Daten über die Mobilfunkkommunikation basierend auf den Steuerdaten, die gemäß der geänderten Version des Protokolls generiert wurden.

7. Elektronische Vorrichtung nach einem der Ansprüche 1 bis 6, wobei die Informationen des Mobilfunknetzes eine Generation des Mobilfunknetzes und/oder eine durch das Mobilfunknetz unterstützte Funktion einschließen.

8. Elektronische Vorrichtung nach einem der Ansprüche 1 bis 7, wobei die Version des Protokolls basierend auf einer Generation des Mobilfunknetzes und/oder einer durch das Mobilfunknetz unterstützten Funktion bestimmt wird.

9. Elektronische Vorrichtung nach einem der Ansprüche 1 bis 8, wobei das Protokoll ein Protokoll eines mobilen Breitbandschnittstellenmodells (MBIM) einschließt.

10. Elektronische Vorrichtung nach Anspruch 9, wobei die Kommunikationsschaltung ferner zu Folgendem konfiguriert ist:
Bestimmen der Version des Protokolls als MBIM 1.0, falls das Mobilfunknetz Long-Term Evolution (LTE) unterstützt und New Radio (NR) nicht unterstützt,
Bestimmen der Version des Protokolls als MBIM 2.0, falls das Mobilfunknetz den Nicht-Standalone(NSA)-Modus von NR unterstützt und den Standalone(SA)-Modus von NR nicht unterstützt, und
Bestimmen der Version des Protokolls als MBIM 3.0, falls das Mobilfunknetz den SA-Modus von NR unterstützt.

11. Elektronische Vorrichtung nach einem der Ansprüche 1 bis 10, wobei die Kommunikationsschaltung ferner dazu konfiguriert ist, von dem Prozessor Informationen zu empfangen, die mindestens eine Version des Protokolls angeben, die der Prozessor unterstützt,
wobei das Generieren der Informationen, die die Version des Protokolls angeben, Bestimmen einer Version des Protokolls basierend auf den erlangten Informationen des Mobilfunknetzes und den empfangenen Informationen, die die mindestens eine Version des Protokolls angeben, die der Prozessor unterstützt, umfasst.

12. Verfahren zum Betreiben einer elektronischen Vorrichtung, wobei das Verfahren Folgendes umfasst:
Generieren von Informationen durch eine Kommunikationsschaltung der elektronischen Vorrichtung, die eine Version eines Protokolls zum Austauschen von Daten zwischen der Kommunikationsschaltung und einem Prozessor angeben, basierend auf Informationen eines mit der elektronischen Vorrichtung verbundenen Mobilfunknetzes;
Übertragen der generierten Informationen, die die Version des Protokolls angeben, durch die Kommunikationsschaltung an den Prozessor;
Empfangen von Steuerdaten, die gemäß der Version des Protokolls generiert wurden, durch die Kommunikationsschaltung von dem Prozessor; und
Übertragen und/oder Empfangen von Daten durch die Kommunikationsschaltung mittels der Mobilfunkkommunikation basierend auf den Steuerdaten.

13. Verfahren nach Anspruch 12, wobei die Steuerdaten gemäß der angegebenen Version des Protokolls derart generiert werden, dass:
Daten, die durch eine höhere Version als die Version des Protokolls unterstützt werden, aus den Steuerdaten ausgeschlossen werden.

14. Verfahren nach Anspruch 12 und Anspruch 13, wobei die Steuerdaten gemäß der Version des Protokolls derart generiert werden, dass Daten, die sich auf eine Funktion beziehen, die nicht durch das Mobilfunknetz unterstützt wird, aus den Steuerdaten ausgeschlossen werden.

15. Computerlesbares Aufzeichnungsmedium, das dazu konfiguriert ist, Anweisungen zu speichern,
wobei die Anweisungen Anweisungen umfassen, die, wenn sie durch mindestens einen Prozessor einer elektronischen Vorrichtung ausgeführt werden, die elektronische Vorrichtung zu Folgendem veranlassen:
Erlangen von Informationen eines mit der elektronischen Vorrichtung verbundenen Mobilfunknetzes;
Generieren von Informationen, die eine Version des Protokolls zum Austauschen von Daten zwischen einer Kommunikationsschaltung der elektronischen Vorrichtung und einem Prozessor angeben, basierend auf den erlangten Informationen des Mobilfunknetzes;
Übertragen der generierten Informationen, die die Version des Protokolls angeben, an den Prozessor;
Empfangen von Steuerdaten, die gemäß der angegebenen Version des Protokolls generiert wurden, von dem Prozessor; und
Übertragen und/oder Empfangen von Daten mittels der Mobilfunkkommunikation basierend auf den Steuerdaten.

## Revendications

1. Dispositif électronique, comprenant :
un circuit de communication (210) destiné à prendre en charge la communication cellulaire ;
un processeur (220) ; et
une mémoire (230) configurée pour stocker des données relatives au protocole d'échange de données entre le circuit de communication et le processeur ;
ledit circuit de communication étant configuré pour :
acquérir des informations d'un réseau cellulaire connecté au dispositif électronique,
générer, sur la base des informations acquises du réseau cellulaire, des informations indiquant une version d'un protocole en vue de l'échange de données entre le circuit de communication et le processeur,
transmettre les informations générées indiquant la version du protocole au processeur,
recevoir, en provenance du processeur, des données de commande générées selon la version indiquée du protocole, et
transmettre et/ou recevoir des données par l'intermédiaire de la communication cellulaire sur la base des données de commande.

2. Dispositif électronique de la revendication 1, lesdites données de commande étant générées selon la version indiquée du protocole de sorte que les données supportées par une version supérieure à la version du protocole soient exclues des données de commande.

3. Dispositif électronique de la revendication 1 ou 2, lesdites données de commande étant générées selon la version indiquée du protocole de sorte que des données relatives à une fonction non prise en charge par le réseau cellulaire soient exclues des données de commande.

4. Dispositif électronique de l'une quelconque des revendications 1 à 3, ledit circuit de communication étant en outre configuré pour :
transmettre un message de fin de protocole au processeur ;
recevoir, en provenance du processeur, un premier message de réponse ;
recevoir, en provenance du processeur, un message de démarrage de protocole ;
transmettre, en réponse à la réception du message de démarrage du protocole, un second message de réponse au processeur ; et
transmettre les informations générées indiquant la version du protocole au processeur.

5. Dispositif électronique de l'une quelconque des revendications 1 à 4, ledit circuit de communication étant en outre configuré pour :
transmettre et/ou recevoir des données de commande générées selon une version initiale du protocole au/en provenance du processeur lorsque le dispositif électronique est démarré,
ladite génération des informations indiquant la version du protocole comprenant la détermination pour savoir si la version du protocole doit être modifiée sur la base des informations acquises du réseau cellulaire, et la génération des informations indiquant la version du protocole, lesdites informations indiquant la version du protocole indiquant la version modifiée du protocole.

6. Dispositif électronique de l'une quelconque des revendications 1 à 5, ledit circuit de communication étant en outre configuré pour :
transmettre et/ou recevoir des données de commande générées selon la version du protocole au/en provenance du processeur,
déterminer, dans le cas où la modification du réseau cellulaire est déterminée, si la version du protocole doit être modifié sur la base des informations du réseau cellulaire modifié,
transmettre, au processeur, dans le cas où la modification de la version du protocole est déterminée, des informations indiquant la version modifiée du protocole,
recevoir, en provenance du processeur, des données de commande générées selon la version modifiée du protocole, et
transmettre et/ou recevoir des données par l'intermédiaire de la communication cellulaire sur la base des données de commande générées selon la version modifiée du protocole.

7. Dispositif électronique de l'une quelconque des revendications 1 à 6, lesdites informations du réseau cellulaire comprenant une génération du réseau cellulaire et/ou une fonction prise en charge par le réseau cellulaire.

8. Dispositif électronique de l'une quelconque des revendications 1 à 7, ladite version du protocole étant déterminée sur la base d'une génération du réseau cellulaire et/ou d'une fonction prise en charge par le réseau cellulaire.

9. Dispositif électronique de l'une quelconque des revendications 1 à 8, ledit protocole comprenant un protocole de modèle d'interface à large bande mobile (MBIM).

10. Dispositif électronique de la revendication 9, ledit circuit de communication étant en outre configuré pour :
déterminer la version du protocole en tant que MBIM 1.0 si le réseau cellulaire prend en charge l'évolution à long terme (LTE) et ne prend pas en charge la nouvelle radio (NR),
déterminer la version du protocole en tant que MBIM 2.0 si le réseau cellulaire prend en charge le mode non autonome (NSA) de NR et ne prend pas en charge le mode autonome (SA) de NR, et
déterminer la version du protocole en tant que MBIM 3.0 si le réseau cellulaire prend en charge le mode SA de NR.

11. Dispositif électronique de l'une quelconque des revendications 1 à 10, ledit circuit de communication étant en outre configuré pour recevoir, en provenance du processeur, des informations indiquant au moins une version du protocole que le processeur prend en charge,
ladite génération des informations indiquant la version du protocole comprenant la détermination d'une version du protocole sur la base des informations acquises du réseau cellulaire et des informations reçues indiquant ladite au moins une version du protocole que le processeur prend en charge.

12. Procédé permettant l'exploitation d'un dispositif électronique, le procédé comprenant :
la génération, par un circuit de communication du dispositif électronique, des informations indiquant une version d'un protocole en vue de l'échange de données entre le circuit de communication et un processeur, sur la base des informations d'un réseau cellulaire connecté au dispositif électronique ;
la transmission, par le circuit de communication, des informations générées indiquant la version du protocole au processeur ;
la réception, par le circuit de communication, des données de commande générées selon la version du protocole en provenance du processeur ; et
la transmission et/ou la réception, par le circuit de communication, de données par l'intermédiaire de la communication cellulaire, sur la base des données de commande.

13. Procédé de la revendication 12, lesdites données de commande étant générées selon la version indiquée du protocole de sorte que :
des données supportées par une version supérieure à la version du protocole soient exclues des données de commande.

14. Procédé de la revendication 12 et de la revendication 13, lesdites données de commande étant générées selon la version du protocole de sorte que des données relatives à une fonction non prise en charge par le réseau cellulaire soient exclues des données de commande.

15. Support d'enregistrement lisible par ordinateur configuré pour stocker des instructions,
lesdites instructions comprenant des instructions qui, lorsqu'elles sont exécutées par au moins un processeur d'un dispositif électronique, amènent le dispositif électronique à :
acquérir des informations d'un réseau cellulaire connecté au dispositif électronique ;
générer, sur la base des informations acquises du réseau cellulaire, des informations indiquant une version du protocole en vue de l'échange de données entre un circuit de communication du dispositif électronique et un processeur ;
transmettre les informations générées indiquant la version du protocole au processeur ;
recevoir des données de commande générées selon la version indiquée du protocole en provenance du processeur ; et
transmettre et/ou recevoir des données par l'intermédiaire de la communication cellulaire sur la base des données de commande.
